(19)

Europäisches
Patentamt
European
Patent Office
Office européen
des brevets

(11) **EP 4 583 368 A1**

(12) **EUROPEAN PATENT APPLICATION**

(43) Date of publication:
**09.07.2025 Bulletin 2025/28**

(21) Application number: **24150334.1**

(22) Date of filing: **04.01.2024**

(51) International Patent Classification (IPC):
**H02K 1/27915** *(2022.01)*  **H02K 29/03** *(2006.01)*
**H02K 7/18** *(2006.01)*  **H02K 21/22** *(2006.01)*

(52) Cooperative Patent Classification (CPC):
**H02K 1/27915; H02K 7/1838; H02K 21/22;**
H02K 2201/03; H02K 2213/03

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Gamesa Renewable Energy
A/S**
**7330 Brande (DK)**

(72) Inventors:
• **Azar, Ziad**
**Sheffield, S10 4ED (GB)**
• **Clark, Richard**
**Worrall, S35 0AF (GB)**

(74) Representative: **SGRE-Association**
**Siemens Energy Global GmbH & Co. KG**
**SE I IM P Intellectual Property**
**Siemenspromenade 9**
**91058 Erlangen (DE)**

(54) **PERMANENT MAGNET FOR A ROTOR OF A WIND TURBINE AND METHOD OF SHAPING A PERMANENT MAGNET**

(57)    It is described a rotor of an electric generator (5) of a wind turbine (1). The rotor is driven by wind energy in a predetermined rotational direction ($\omega$) about a rotational axis (8). The rotor comprises a plurality of permanent magnets (10) each having a mounting surface (11), where the permanent magnet (10) is mounted to a rotor body (12) of the rotor. Each permanent magnet (10) has a cross section being perpendicular to a rotational axis (8) of the rotor. A line (L) is defined to intersect the rotational axis (8) and a center (C11) of the mounting surface (11), the line (L) dividing the cross section of each permanent magnet (10) in a leading portion and a trailing portion with respect to the rotational direction ($\omega$) about the rotational axis (8). At least for a majority of the plurality of permanent magnets (10), an area of the leading portion is preferably larger than an area of the trailing portion.

FIG 3

EP 4 583 368 A1

**Description**

Field of invention

The present invention relates to a permanent magnet for a rotor of a wind turbine, a rotor, a wind turbine and a method of shaping a permanent magnet for a rotor of an electric generator.

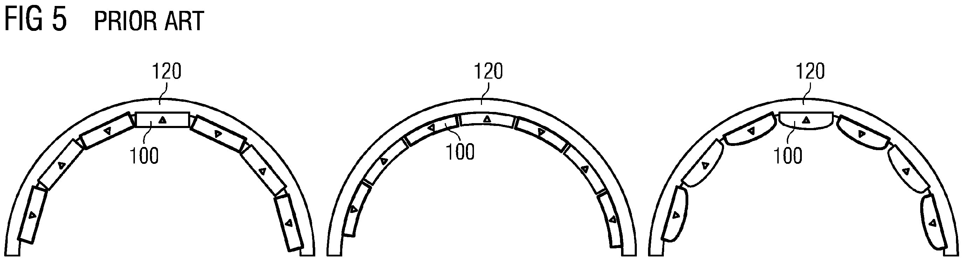

**Fig. 5** shows a radial cross section of a section of a rotor of an electric generator according to the prior art. Electric generators of wind turbines usually employ permanent magnets in a magnet module that is geometrically symmetric in the circumferential direction about a radial centre line/plane. Direct drive (DD) wind turbines employ a permanent magnet generator with surface mounted permanent magnets on an outer rotor. In Fig. 5, number of typical permanent magnet shapes is surface mounted in a rotor. The magnet profile or shape is a plain rectangle at the left side of Fig. 5, an arc magnet in the middle of Fig. 5, and a "bread loaf" shape at the right side of Fig. 5. In all these cases, the permanent magnets are symmetrically shaped about a radial centre radial line/plane (i.e., circumferentially symmetrical).

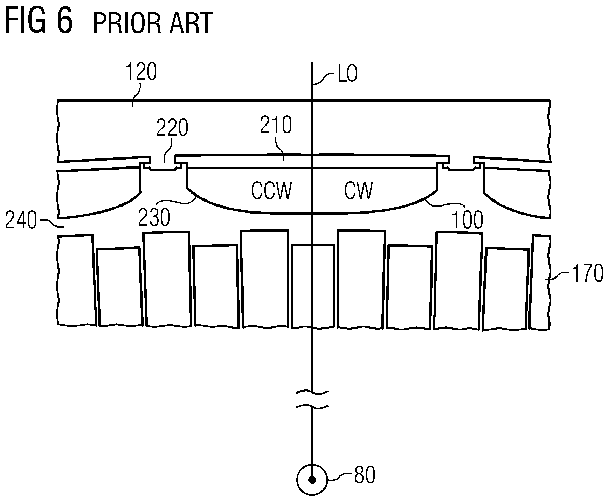

**Fig. 6** shows radial cross sections of a section of rotors of an electric generator according to the prior art. Radially inside the rotor, a stator 170 is arranged with an air gap 240 therebetween. The rotor comprises a plurality of permanent magnets 100. Each permanent magnet 100 is housed within a magnet cover 230 so that a magnet module is formed. In the magnet module, the permanent magnet 100 is bonded onto a base plate 210. The cover 230 is located over the permanent magnet 100 and welded to the base plate 210. The magnet module is then mounted to a rotor body 120 inside a rotating rotor housing using a T-shaped bracket 220 of the rotor body 120, which engages a complementary portion of the base plate 210. A line L0 passing through a center of the base plate 210 of the permanent magnet 100 and a rotational axis 80 of the rotor defines a mirror plane, to which the permanent magnet 100 is symmetrically shaped.

Summary of the invention

There may be a need for a permanent magnet for a rotor of a wind turbine, a rotor, a wind turbine and a method of shaping a permanent magnet for a rotor of an electric generator, which can increase the efficiency and/or durability of the electric generator, while the manufacturing costs thereof are reduced. This need may be met by the subject matters according to the independent claims. The present invention is further developed as set forth in the dependent claims.

According to a first aspect of the invention, a permanent magnet for a rotor of an electric generator is provided. The permanent magnet comprises a mounting surface configured to be mounted to a rotor body; a distal surface arranged at a side opposite to the mounting surface, the distal surface comprising two slanted surfaces and a central surface between the slanted surfaces. Both or one of the two slanted surfaces and/or the central surface can be substantially flat planes, wherein edges between the central surface and the respective slanted surface can be rounded. In a cross section of the permanent magnet perpendicular to a rotational axis of the rotor, a center point of the central surface is shifted in a rotational direction or a counter rotational direction of the rotor from a line connecting a center point of the mounting surface and the rotational axis. The line can alternatively be defined as a normal passing through the center point of the mounting surface.

In an embodiment, the permanent magnet has a height larger than 10 mm, preferably between 15-30 mm; and/or the mounting surface has a circumferential length larger than 50 mm, preferably between 80 to 150 mm. Preferably, the height can be measured along a radial direction of a suitable rotor.

According to a second aspect of the invention, a wind turbine is provided which comprises an electric generator with a rotor comprising a plurality of the permanent magnets. The rotor is driven by wind energy in a rotational direction about a rotational axis. The center point of the central surface is shifted in the rotational direction or a counter rotational direction of the rotor from the line connecting the center point of the mounting surface and the rotational axis. The line can alternatively be defined as a normal passing through the center point of the mounting surface.

In an embodiment, the distal surface is exposed to a stator of the electric generator of the wind turbine. The stator comprises a plurality of slots, where at least one stator coil is arranged, wherein each permanent magnet extends over at least two slots; or the stator comprises a concentrated winding topology in which the number of slots per pole per phase is a fraction and the permanent magnet extends over at least one slot. The stator can be arranged radially inside or radially outside of the rotor.

In an embodiment, the plurality of permanent magnets is mounted via the mounting surface to a cylindric rotor body mounting surface of the rotor body of the rotor, the rotor body mounting surface having a diameter larger than 2000 mmm, preferably larger than 3000 mm.

According to a third aspect of the invention, a method of shaping a permanent magnet for a rotor of an electric generator is provided. The method comprises steps of providing a mounting surface of the permanent magnet, the mounting surface being configured to be mounted to a rotor body of the electric generator; providing a distal surface arranged at a side opposite to the mounting surface, the distal surface comprising two slanted surfaces and a central surface between the slanted surfaces. In a cross section of the permanent magnet perpendicular to a rotational axis of the

2

**EP 4 583 368 A1**

rotor, a center point of the central surface is shifted in a rotational direction or a counter rotational direction of the rotor from a line connecting a center point of the mounting surface and the rotational axis.

In an embodiment, a shifting amount is determined for optimizing a torque per an entire permanent magnet volume, and/or for enhancing a demagnetization withstand capability, and/or for reducing force ripple harmonics. The optimization may target either increased torque for same magnet volume or reduced magnet volume for the same torque.

According to a fourth aspect of the invention, a rotor of an electric generator of a wind turbine is provided. The rotor is driven by wind energy in a predetermined rotational direction about a rotational axis. The rotor comprises a plurality of permanent magnets each having a mounting surface, where the permanent magnet is mounted via the mounting surface to a rotor body of the rotor. Each permanent magnet has a cross section being perpendicular to a rotational axis of the rotor, wherein a line is either defined to intersect the rotational axis and a center of the mounting surface, or as a normal passing through the center point of the mounting surface, the line dividing the cross section of each permanent magnet in a leading portion and a trailing portion with respect to the rotational direction about the rotational axis. At least for a majority, preferably all, of the plurality of permanent magnets, an area of the leading portion is smaller or larger than an area of the trailing portion. Preferably, the condition that an area of the leading portion is smaller or larger than an area of the trailing portion applies for all cross sections of the permanent magnet. Although the context of the fourth aspect defines that the area of the leading portion is smaller or larger than an area of the trailing portion, it is clear that such permanent magnet will likewise have a volume of a leading body portion being smaller or larger than a volume of a trailing body portion. The leading body portion and the trailing body portion are divided by a plane which is defined by a projection of the above-mentioned line along the rotational axis.

In an embodiment, the rotor comprises at least one of the following features: each permanent magnet has a height larger than 10 mm, preferably between 15-30 mm; the mounting surface has a circumferential length larger than 50 mm, preferably between 80 to 150 mm; the plurality of permanent magnets is mounted to a cylindric rotor body mounting surface of the rotor body of the rotor, the rotor body mounting surface having a diameter larger than 2000 mmm, preferably larger than 3000 mm.

In the context of the present invention, the term "circumferential length" refers to a length of the permanent magnet along a circumferential direction of the rotor.

In an embodiment, a difference between the area of the leading portion and the area of the trailing portion is determined for optimizing a torque per an entire permanent magnet volume, and/or for enhancing a demagnetization withstand capability, and/or for reducing force ripple harmonics. The optimization may target either increased torque for same magnet volume or reduced magnet volume for the same torque.

In an embodiment, each permanent magnet has a volume of a leading body portion being smaller or larger than a volume of a trailing body portion, wherein the leading body portion and the trailing body portion are divided by a plane which is defined by a projection of the line along the rotational axis.

In an embodiment, each permanent magnet has a depth D along the rotational axis which coincides with a cartesian coordinate x, wherein an integral of the leading portions $\int_0^D (area\ of\ leading\ portion)dx$ along the depth D is smaller or larger than an integral of the trailing portions $\int_0^D (area\ of\ trailing\ portion)dx$ along the depth D so that either $\int_0^D (area\ of\ leading\ portion)dx < \int_0^D (area\ of\ trailing\ portion)dx$ ; or

$$\int_0^D (area\ of\ leading\ portion)dx > \int_0^D (area\ of\ trailing\ portion)dx$$

.

Here, the integral of the leading portions corresponds to a leading body portion volume, and the integral of the trailing portions corresponds to a trailing body portion volume. The leading body portion volume is thus smaller or larger than the trailing body portion volume.

In an embodiment, each permanent magnet comprises a distal surface exposed to a stator of the electric generator. The stator comprises a plurality of slots, where at least one stator coil is arranged, wherein each permanent magnet extends over at least two slots; or the stator comprises a concentrated winding topology, in which the number of slots per pole per phase is a fraction and the magnet extends over at least one slot. The stator can be arranged radially inside or radially outside of the rotor.

In the prior art electric generators of a wind turbine, under potential faulted conditions of a short circuit in the stator windings, connecting cables or converter, peak currents significantly higher than the rated values can occur. The resulting stator magnetomotive force (mmf) in prior art permanent magnets could lead to the magnet working points being driven beyond their normal operation in the linear region on the second quadrant of the B-H-characteristic and potentially beyond the characteristic "knee" (the location of which is temperature dependent) which can lead to irreversible demagnetization of the permanent magnet and a loss of performance once the fault is cleared. To prevent demagnetization, the magnet

3

radial thickness is often symmetrically increased in the prior art. However, due to the angular relationship between the rotor magnets and the stator field, the present invention does not use symmetrical shapes of the permanent magnets which has an advantage in optimizing the use of magnet material by only increasing the magnet thickness in certain locations and not necessarily symmetrically. This is particularly advantageous in large wind turbines which are mainly operated in a forward generating mode. Advantageously, in the present invention, the use of an asymmetric magnet profile optimizes the distribution of the expensive magnet material within the permanent magnet.

Given the above operational requirements, the pervasive accepted convention of limiting design to a symmetrical magnet may not represent the most optimum use/arrangement of the very expensive magnet material (the required rare-earth permanent magnet material to is by far the most expensive material per kg used with in the generator and despite its low content relative to the overall generator volume/mass still represents a significant proportion of the overall material costs). The present invention optimizes the distribution of the expensive magnet material within the permanent magnet with regard to the operation mode, preferably in the forward generating mode. The advantage is particularly relevant for large wind turbines as the dimensions and thus the material savings are particular high.

For example, the availability of finite element models and powerful computing systems in which the magnet shape to be freely controlled/defined can allow optimization of the magnet shape without the constraint that the magnet is symmetrical and the torque per magnet volume can be further maximized (targeting either increased torque for same magnet volume or reduced magnet volume for the same torque, or an enhancement of the demagnetization withstand capability).

As a result, the convention that magnets have to be symmetrical has been removed. The design flexibility is increased to locate the expensive magnet material where is most effective. Magnet material can be removed from areas where it would not contribute to the performance given the operation over a limited range (single quadrant of power-speed plane, limited current angle range). A magnet thickness can be enhanced in areas required for demagnetisation to withstand short circuit or faulted conditions. The radial forces acting on the magnet module can be enhanced, and vibrations or a tonality can be tuned. A cooling effectiveness can be increased due to larger air gaps between asymmetric magnets and a stator.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Fig. 1    shows a wind turbine and the different elements thereof;

Fig. 2    shows a radial cross section of a section of a rotor of an electric generator according to a first embodiment;

Fig. 3    shows a radial cross section of a section of a rotor of an electric generator according to a second embodiment;

Fig. 4    shows different operation modes of a wind turbine;

Fig. 5    shows a radial cross section of a section of a rotor of an electric generator according to the prior art; and

Fig. 6    shows radial cross sections of a section of rotors of an electric generator according to the prior art.

Detailed Description

The illustrations in the drawings are schematically. It is noted that in different figures, similar or identical elements are provided with the same reference signs.

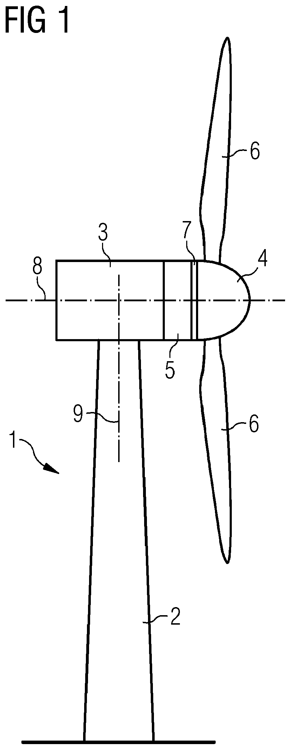

**Fig. 1** shows a wind turbine 1. The wind turbine 1 comprises a nacelle 3 and a tower 2. The nacelle 3 is mounted at the top of the tower 2. The nacelle 3 is mounted rotatable with regard to the tower 2 by means of a yaw bearing. The axis of rotation of the nacelle 3 with regard to the tower 2 is referred to as a yaw axis 9.

The wind turbine 1 also comprises a rotor hub 4 with three rotor blades 6 (of which two rotor blades 6 are depicted in Fig. 1). Each blade 6 is configured to be pitched by a pitch angle about a pitch axis of the blade 6. The rotor hub 4 is mounted rotatable about a rotational axis 8 (rotor axis) with regard to the nacelle 3 by means of a main bearing 7.

The wind turbine 1 furthermore comprises a generator 5. The generator 5 in turn comprises a rotor connecting the generator 5 with the rotor hub 4. If the rotor hub 4 is connected directly to the generator 5, the wind turbine 1 is referred to as a gearless, direct-driven wind turbine. Such a generator 5 is referred as direct drive generator 5. As an alternative, the rotor hub 4 may also be connected to the generator 5 via a gear box. This type of wind turbine 1 is referred to as a geared wind turbine. The present invention is suitable for both types of wind turbines 1.

The generator 5 is accommodated within the nacelle 3. The generator 5 is arranged and prepared for converting the rotational energy from the rotor hub 4 into electrical energy in the shape of an AC power.

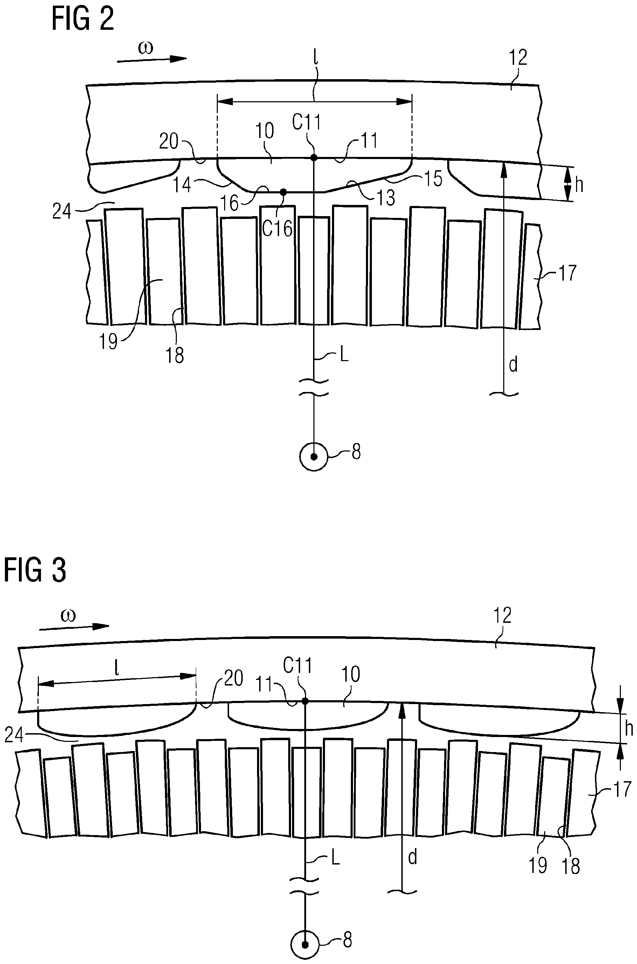

**Fig. 2** shows a radial cross section of a section of a rotor of an electric generator 5 according to a first embodiment. The rotor comprises a plurality of permanent magnets 10 which are mounted via their mounting surfaces 11 to a cylindric rotor body mounting surface 20 of a rotor body 12 of the rotor. A diameter d of the rotor body mounting surface 20 can be at least 2000 mmm, preferably larger than 3000 mm. The permanent magnets 10 can have a height h larger than 10 mm, preferably between 15-30 mm. The mounting surface 11 can have a circumferential length l larger than 50 mm, preferably between 80 to 150 mm.

The permanent magnet 10 comprises the mounting surface 11 configured to be mounted to the rotor body 12 and a distal surface 13 arranged at a side opposite to the mounting surface 11. The distal surface 13 comprises two slanted surfaces 14, 15 and a central surface 16 between the slanted surfaces 14, 15. Both or one of the slanted surfaces 14, 15 and/or the central surface 16 can be substantially flat planes. Edges between the central surface 16 and the respective slanted surface 14, 15 can be rounded.

In a cross section of the permanent magnet 10 perpendicular to the rotational axis 8 of the rotor, a center point C16 of the central surface 16 is shifted in a rotational direction ω or a counter rotational direction of the rotor from a line L connecting a center point C11 of the mounting surface 11 and the rotational axis 8. The line L can alternatively be defined as a normal passing through the center point C11 of the mounting surface 11.

In an embodiment, the wind turbine 1 of Fig. 1 comprises the electric generator 5 with the rotor of Fig. 2, which comprising the plurality of the permanent magnets 10. The rotor is driven by wind energy in the rotational direction ω about the rotational axis 8. The center point C16 of the central surface 16 is shifted in the rotational direction ω, or a counter rotational direction, dependent on the operation requirements, of the rotor from the line L connecting the center point C11 of the mounting surface 11 and the rotational axis 8.

As shown in Fig. 2, the distal surface 13 is exposed to a stator 17 of the electric generator 5 of the wind turbine 1. The stator 17 is arranged radially inside of the rotor with an air gap 24 therebetween. However, the present invention is also applicable in a modified embodiment, where the stator 17 is arranged radially outside of the rotor. The stator 17 comprises a plurality of slots 18, where at least one stator coil 19 is arranged, wherein each permanent magnet 10 extends over at least two slots 18. In case the stator 17 comprises a concentrated winding topology, in which the number of slots per pole per phase is a fraction and the permanent magnet 10 extends over at least one slot.

With regard to the embodiment of Fig. 2, a method of shaping the permanent magnet 10 for the rotor of the electric generator 5, for instance using Computer-Aided-Design (CAD),such as Finite Element Analysis , can comprise the following steps: providing a mounting surface 11 of the permanent magnet 10, wherein the mounting surface 11 is configured to be mounted to a rotor body 12 of the electric generator 5; and providing a distal surface 13 arranged at a side opposite to the mounting surface 11, wherein the distal surface 13 comprises two slanted surfaces 14, 15 and a central surface 16 between the slanted surfaces 14, 15. In a cross section of the permanent magnet 10 perpendicular to a rotational axis 8 of the rotor, a center point C16 of the central surface 16 is shifted in a rotational direction ω or a counter rotational direction of the rotor from a line L connecting a center point C11 of the mounting surface 11 and the rotational axis 8. The line L can alternatively be defined as a normal passing through the center point C11 of the mounting surface 11. A shifting amount can be determined for optimizing a torque per an entire permanent magnet volume, and/or for enhancing a demagnetization withstand capability, and/or for reducing force ripple harmonics. The optimization may target either increased torque for same magnet volume or reduced magnet volume for the same torque.

In an embodiment, an initial symmetric profile could be used, where the central surface 16 and the slanted surfaces 14, 15 are initially symmetrically formed with regard to the line L. In a further shaping step, material can be removed from one of the slanted surfaces 14 and 15, and the same material amount can be added to the other one of the slanted surfaces 14 and 15.

On the one hand, the material removal from the one of the slanted surfaces 14 and 15 can lead to a reduction in magnet volume/mass without significantly impacting on the overall performance given the typical operating current angle and relationship between rotor and stator fields. On the other hand, a magnet thickness/height h may simultaneously be increased at the other one of the slanted surfaces 14 and 15 with the overall volume of permanent magnet 10 then being unchanged relative to a baseline while increasing/boosting the performance (maximum torque per amp) that can be achieved as the magnet material is shifted/biased towards areas where it is most effective due to the typical phase angle relationship between rotor and stator fields. The same advantage can be achieved by the second embodiment, which is described in the following.

**Fig. 3** shows a radial cross section of a section of a rotor of an electric generator 5 according to the second embodiment. The rotor is driven by wind energy in a predetermined rotational direction ω about a rotational axis 8. The rotor comprises a plurality of permanent magnets 10 each having a mounting surface 11, where the permanent magnet 10 is mounted to a rotor body 12 of the rotor, in particular to a cylindric rotor body mounting surface 20 of the rotor body 12 of the rotor. The rotor body mounting surface 20 can have a diameter d larger than 2000 mmm, preferably larger than 3000 mm.

Each permanent magnet 10 has a cross section being perpendicular to a rotational axis 8 of the rotor, wherein a line L is defined to intersect the rotational axis 8 and a center C11 of the mounting surface 11, the line L dividing the cross section of each permanent magnet 10 in a leading portion and a trailing portion with respect to the rotational direction ω. The line L can alternatively be defined as a normal passing through the center point C11 of the mounting surface 11. At least for a majority, preferably all, of the plurality of permanent magnets 10, an area of the leading portion is smaller or larger than an area of the trailing portion. For example, in case the predetermined rotational direction ω of the rotor is the clockwise direction in the embodiment of Fig. 3, the leading portion is arranged at the right-hand side in Fig. 3, and the trailing portion is arranged at the left-hand side in Fig. 3. Preferably, the condition that an area of the leading portion is smaller or larger than an area of the trailing portion applies for all cross sections of the permanent magnet 10.

A difference between the area of the leading portion and the area of the trailing portion is determined for optimizing a torque per an entire permanent magnet volume, and/or for enhancing a demagnetization withstand capability, and/or for reducing force ripple harmonics. The optimization may target either increased torque for same magnet volume or reduced magnet volume for the same torque.

Each permanent magnet 10 can have a height h larger than 10 mm, preferably between 15-30 mm. The mounting surface 11 can have a circumferential length l larger than 50 mm, preferably between 80 to 150 mm.

Fig. 3 further shows that each permanent magnet 10 comprises a distal surface 13 exposed to a stator 17 of the electric generator 5. The stator 17 is arranged radially inside of the rotor with an air gap 24 therebetween. However, the present invention is also applicable in a modified embodiment, where the stator 17 is arranged radially outside of the rotor. The stator 17 comprising a plurality of slots 18, where at least one stator coil 19 is arranged, wherein each permanent magnet 10 extends over at least two slots 18. In case the stator 17 comprises a concentrated winding topology in which the number of slots per pole per phase is a fraction and the magnet extends over at least one slot.

The concept of asymmetric magnets is not limited to the flat-top and linear slope shape as in the first embodiment but can be applied to more complex shapes as in the second embodiment. For example, the shape of the permanent magnets 10 can be defined by Bézier curves, wherein each side of the permanent magnet 10 can be described by an independent Bézier curve as shown in Fig. 3. A wide range of profiles is possible.

The asymmetric shape of the permanent magnets 10 in the second embodiment of Fig. 3 can be achieved by usual molding, powder alignment and sintering processes. The asymmetric net shape could be achieved with asymmetric mold cavities to minimize a post-molding grinding process to achieve the final tolerances. There is no change required to the magnetization process.

Although the second embodiment has the area of the leading portion being smaller or larger than an area of the trailing portion, it is clear that such permanent magnet 10 will likewise have a volume of a leading body portion being smaller or larger than a volume of a trailing body portion. The leading body portion and the trailing body portion are divided by a plane which is defined by a projection of the above-mentioned line L along the rotational axis 8.

In a modified embodiment, each permanent magnet 10 has a depth D along the rotational axis which coincides with a cartesian coordinate x, wherein an integral of the leading portions $\int_0^D (area\ of\ leading\ portion)\,dx$

along the depth D is smaller or larger than an integral of the trailing portions $\int_0^D (area\ of\ trailing\ portion)\,dx$ along the depth D so that either

$$\int_0^D (area\ of\ leading\ portion)\,dx \ < \ \int_0^D (area\ of\ trailing\ portion)\,dx \quad ; \quad or$$

$$\int_0^D (area\ of\ leading\ portion)\,dx \ > \ \int_0^D (area\ of\ trailing\ portion)\,dx \quad .$$

Here, the integral of the leading portions corresponds to a leading body portion volume, and the integral of the trailing portions corresponds to a trailing body portion volume. The leading body portion volume is thus smaller or larger than the trailing body portion volume.

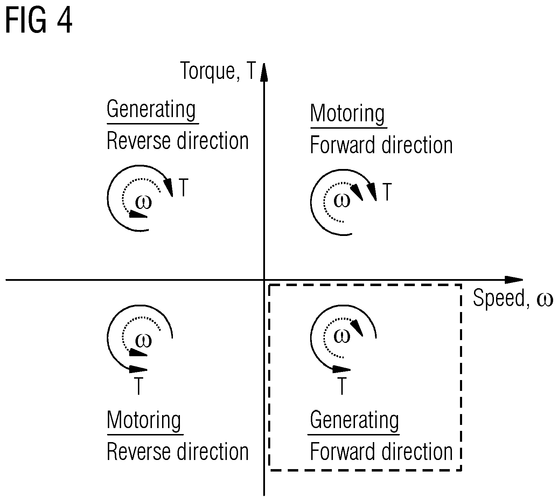

**Fig.** 4 shows different operation modes of a wind turbine 1, i.e., four quadrants in a torque-speed plane including two generating modes in the forward direction and the reverse direction, and two motoring modes in the forward direction and the reverse direction. Some prior art electric generators are operated in all four quadrants, such as hybrid and electric vehicle traction motors, aerospace actuators, industrial servo drives etc.

However, the electric generator 5 of a large wind turbine 1 may operate mainly in one forward generating quadrant as the blades 6 of the wind turbine 1 only allow a rotation in the generating direction so that the wind turbine 1 is basically operated in the forward generating mode with the load torque acting in the opposite direction to the rotation as highlighted in the right bottom quadrant in Fig. 4 (although there might be few very specialized instances where this is not the case, i.e., a service/assembly procedure in which the electric generator 5 temporarily acts as a motor to position and hold the rotor hub 4 in a required orientation, but full performance or efficiency is not required in this specific case).

As a result, the shape of the permanent magnets 10 can asymmetrically be optimized especially for the forward generating mode in the right bottom quadrant of Fig. 4, as the remaining three quadrants are not relevant for a large wind turbine 1. In this case, in view of Fig. 2, the center point C16 of the central surface 16 is preferably shifted in the rotational direction ω of the rotor from either the line L connecting the center point C11 of the mounting surface 11 and the rotational axis 8, or the line L line being defined as the normal passing through the center point C11 of the mounting surface 11.

In view of Fig. 3, at least for the majority, preferably all, of the plurality of permanent magnets 10, the area of the leading portion in the cross section is preferably larger than an area of the trailing portion; or the integral of the leading portions $\int_0^D (area\ of\ leading\ portion)dx$ along the depth D is preferably larger than an integral of the trailing portions $\int_0^D (area\ of\ trailing\ portion)dx$ along the depth D so that

$$\int_0^D (area\ of\ leading\ portion)dx\ >\ \int_0^D (area\ of\ trailing\ portion)dx$$

Further, a power electronic converter is typically controlling a phase angle of the stator currents relative to a rotor mechanical angle to achieve the maximum torque per amp (and hence efficiency) whilst also ensuring the voltage limits are respected. At higher speeds, the currents are controlled to achieve a level of "field-weakening" or de-fluxing of the rotor magnets (by providing d-axis current). The resulting current angle occurring in normal operation is usually then within a relatively limited range the torque versus current angle characteristic.

The permanent magnets 10 of the present invention can be mounted to the rotor body 12 as shown in Fig. 6, where the permanent magnets 10 are housed within a magnet cover 230 so that a magnet module is formed. In the magnet module, the permanent magnet 10 is bonded onto a, preferably ferromagnetic, base plate 210 which can have a thickness of about 4-10 mm. The cover 230 is located over the permanent magnet 10 and fixed to the base plate 210, by means of welding, gluing or other methods, in order to fully encapsulate the permanent magnet 10 and prevent corrosion thereof. The magnet module is then mounted to the rotor body 12 inside a rotating rotor housing, for example via using a T-shaped bracket 220 of the rotor body 12 and/or bolting or other methods, which engages a complementary portion of the base plate 210. Radial, circumferential and tangential movements can be constrained by features machined into the rotor body 12.

The cover 230 can advantageously be molded or pressed into a compatible asymmetric shape together with the inner permanent magnet 10, and the magnet modules can be loaded into the T-shaped bracket 220 with the correct orientation with some minor adjustments to the assembly process.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

Independent of the grammatical term usage, individuals with male, female or other gender identities are included within the term.

**Claims**

1. A permanent magnet (10) for a rotor of an electric generator (5), the permanent magnet (10) comprises:

   a mounting surface (11) configured to be mounted to a rotor body (12);
   a distal surface (13) arranged at a side opposite to the mounting surface (11), the distal surface (13) comprising two slanted surfaces (14, 15) and a central surface (16) between the slanted surfaces (14, 15);
   wherein, in a cross section of the permanent magnet (10) perpendicular to a rotational axis (8) of the rotor, a center point (C16) of the central surface (16) is shifted in a rotational direction (ω) or a counter rotational direction of the rotor from either a line (L) connecting a center point (C11) of the mounting surface (11) and the rotational axis (8), or a line (L) line being defined as a normal passing through the center point (C11) of the mounting surface (11).

2. The permanent magnet (10) according to the preceding claim, wherein
the permanent magnet (10) has a height (h) larger than 10 mm, preferably between 15-30 mm; and/or the mounting surface (11) has a circumferential length (l) larger than 50 mm, preferably between 80 to 150 mm.

3. A wind turbine (1) comprising an electric generator (5) with a rotor comprising a plurality of the permanent magnets (10) according to any one of the preceding claims, wherein the rotor is driven by wind energy in a rotational direction (ω) about a rotational axis (8),
wherein the center point (C16) of the central surface (16) is shifted in the rotational direction (ω) or a counter rotational direction of the rotor either from the line (L) connecting the center point (C11) of the mounting surface (11) and the rotational axis (8), or a line (L) line being defined as a normal passing through the center point (C11) of the mounting surface (11).

4. The wind turbine (1) according to the preceding claim, wherein

the distal surface (13) is exposed to a stator (17) of the electric generator (5) of the wind turbine (1), the stator (17) comprises a plurality of slots (18), where at least one stator coil (19) is arranged, wherein each permanent magnet (10) extends over at least two slots (18); or
the stator (17) comprises a concentrated winding topology, in which the number of slots per pole per phase is a fraction and the permanent magnet (10) extends over at least one slot.

5. The wind turbine (1) according to any one of claims 3 and 4, wherein
the plurality of permanent magnets (10) is mounted via the mounting surface (11) to a cylindric rotor body mounting surface (20) of the rotor body (12) of the rotor, the rotor body mounting surface (20) having a diameter (d) larger than 2000 mmm, preferably larger than 3000 mm.

6. A method of shaping a permanent magnet (10) for a rotor of an electric generator (5), the method comprises steps of:

providing a mounting surface (11) of the permanent magnet (10), the mounting surface (11) being configured to be mounted to a rotor body (12) of the electric generator (5);
providing a distal surface (13) arranged at a side opposite to the mounting surface (11), the distal surface (13) comprising two slanted surfaces (14, 15) and a central surface (16) between the slanted surfaces (14, 15);
wherein, in a cross section of the permanent magnet (10) perpendicular to a rotational axis (8) of the rotor, a center point (C16) of the central surface (16) is shifted in a rotational direction (ω) or a counter rotational direction of the rotor either from a line (L) connecting a center point (C11) of the mounting surface (11) and the rotational axis (8), or a line (L) line being defined as a normal passing through the center point (C11) of the mounting surface (11).

7. The method according to the preceding claim, wherein
a shifting amount is determined for optimizing a torque per an entire permanent magnet volume, and/or for enhancing a demagnetization withstand capability, and/or for reducing force ripple harmonics.

8. A rotor of an electric generator (5) of a wind turbine (1), wherein the rotor is driven by wind energy in a predetermined rotational direction (ω) about a rotational axis (8), the rotor comprises a plurality of permanent magnets (10) each having a mounting surface (11), where the permanent magnet (10) is mounted via the mounting surface (11) to a rotor body (12) of the rotor;

wherein each permanent magnet (10) has a cross section being perpendicular to a rotational axis (8) of the rotor;
wherein a line (L) is either defined to intersect the rotational axis (8) and a center (C11) of the mounting surface (11), or as a normal passing through the center point (C11) of the mounting surface (11), the line (L) dividing the cross section of each permanent magnet (10) in a leading portion and a trailing portion with respect to the rotational direction (ω) about the rotational axis (8);
wherein at least for a majority, preferably all, of the plurality of permanent magnets (10), an area of the leading portion is smaller or larger than an area of the trailing portion.

9. The rotor according to the preceding claim, comprising at least one of the following features:

each permanent magnet (10) has a height (h) larger than 10 mm, preferably between 15 to 30 mm;

the mounting surface (11) has a circumferential length (l) larger than 50 mm, preferably between 80 to 150 mm; the plurality of permanent magnets (10) is mounted via the mounting surface (11) to a cylindric rotor body mounting surface (20) of the rotor body (12) of the rotor, the rotor body mounting surface (20) having a diameter (d) larger than 2000 mmm, preferably larger than 3000 mm.

10. The rotor according to any one of claims 8 and 9, wherein
a difference between the area of the leading portion and the area of the trailing portion is determined for optimizing a torque per an entire permanent magnet volume, and/or for enhancing a demagnetization withstand capability, and/or for reducing force ripple harmonics.

11. The rotor according to any one of claims 8 to 10, wherein
each permanent magnet (10) has a volume of a leading body portion being smaller or larger than a volume of a trailing body portion, wherein the leading body portion and the trailing body portion are divided by a plane which is defined by a projection of the line (L) along the rotational axis (8).

12. The rotor according to any one of claims 8 to 11, wherein
each permanent magnet (10) has a depth D along the rotational axis (8) which coincides with a cartesian coordinate x, wherein an integral of the leading portions $\int_0^D (area\ of\ leading\ portion)dx$ along the depth D is smaller or larger than an integral of the trailing portions $\int_0^D (area\ of\ trailing\ portion)dx$ along the depth D so that either

$$\int_0^D (area\ of\ leading\ portion)dx \ < \ \int_0^D (area\ of\ trailing\ portion)dx \ ; \quad or$$

$$\int_0^D (area\ of\ leading\ portion)dx \ > \ \int_0^D (area\ of\ trailing\ portion)dx \ .$$

13. An electric generator (5) comprising a rotor according to any one of claims 8 to 12, wherein

each permanent magnet (10) comprises a distal surface (13) exposed to a stator (17) of the electric generator (5), the stator (17) comprising a plurality of slots (18), where at least one stator coil (19) is arranged, wherein each permanent magnet (10) extends over at least two slots (18); or
the stator (17) comprises a concentrated winding topology, in which the number of slots per pole per phase is a fraction and the permanent magnet (10) extends over at least one slot.

## FIG 1

FIG 2

FIG 3

# FIG 4

Torque, T

Generating
Reverse direction

Motoring
Forward direction

Speed, ω

Motoring
Reverse direction

Generating
Forward direction

EP 4 583 368 A1

## FIG 5  PRIOR ART

# FIG 6  PRIOR ART

Europäisches
Patentamt

European
Patent Office

Office européen
des brevets

## EUROPEAN SEARCH REPORT

**Application Number**

EP 24 15 0334

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 600 497 A1 (SIEMENS AG [DE]) 5 June 2013 (2013-06-05) * paragraph [0027] - paragraph [0039]; figures 1-6 * * paragraph [0040] - paragraph [0041]; figure 7 * | 1-13 | INV. H02K1/27915 H02K29/03 H02K7/18 H02K21/22 |
| X | US 2002/084711 A1 (PIECH ZBIGNIEW [US] ET AL) 4 July 2002 (2002-07-04) * paragraph [0015] - paragraph [0022]; figures 1, 2 * | 1,6,8 | |
| X | CH 660 265 A5 (K & S SCHRITTMOTOREN GMBH) 31 March 1987 (1987-03-31) * page 3, column 1, line 12 - column 2, line 5; figure 4 * | 8 | |
| X | US 2003/201681 A1 (SHIMIZU YASUO [JP] ET AL) 30 October 2003 (2003-10-30) * paragraph [0078] - paragraph [0098]; figures 9-13 * | 8 | |

**TECHNICAL FIELDS SEARCHED (IPC)**

H02K

The present search report has been drawn up for all claims

| Place of search | Date of completion of the search | Examiner |
|---|---|---|
| The Hague | 13 June 2024 | Zavelcuta, Florin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 0334

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2024

| Patent document cited in search report | | Publication date | Patent family member(s) | | Publication date |
|---|---|---|---|---|---|
| EP 2600497 | A1 | 05-06-2013 | NONE | | |
| US 2002084711 | A1 | 04-07-2002 | CN | 1362772 A | 07-08-2002 |
| | | | DE | 10164291 A1 | 18-07-2002 |
| | | | JP | 4160299 B2 | 01-10-2008 |
| | | | JP | 2002209351 A | 26-07-2002 |
| | | | US | 2002084711 A1 | 04-07-2002 |
| CH 660265 | A5 | 31-03-1987 | NONE | | |
| US 2003201681 | A1 | 30-10-2003 | EP | 1359661 A2 | 05-11-2003 |
| | | | JP | 4101552 B2 | 18-06-2008 |
| | | | JP | 2003324867 A | 14-11-2003 |
| | | | US | 2003201681 A1 | 30-10-2003 |

EPO FORM P0459

For more details about this annex : see Official Journal of the European Patent Office, No. 12/82